(19) Europäisches Patentamt / European Patent Office / Office européen des brevets

(11) **EP 2 870 038 B1**

(12) **FASCICULE DE BREVET EUROPEEN**

(45) Date de publication et mention de la délivrance du brevet:
**05.09.2018 Bulletin 2018/36**

(21) Numéro de dépôt: **13739763.4**

(22) Date de dépôt: **01.07.2013**

(51) Int Cl.:
***B60T 8/1755*** *(2006.01)*

(86) Numéro de dépôt international:
**PCT/FR2013/051540**

(87) Numéro de publication internationale:
**WO 2014/006314 (09.01.2014 Gazette 2014/02)**

(54) **SYSTEME ET PROCEDE DE SUIVI DE LA TRAJECTOIRE D'UN VEHICULE**

SYSTEM UND VERFAHREN ZUR ÜBERWACHUNG EINER FAHRZEUGBAHN

SYSTEM AND METHOD FOR MONITORING THE TRAJECTORY OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2012 FR 1256370**

(43) Date de publication de la demande:
**13.05.2015 Bulletin 2015/20**

(73) Titulaire: **Renault S.A.S.**
**92100 Boulogne-Billancourt (FR)**

(72) Inventeurs:
• **AMARA, Sofiane**
**75013 Paris (FR)**
• **PITA-GIL, Guillermo**
**F-75017 Paris (FR)**

(56) Documents cités:
**FR-A1- 2 955 943     FR-A3- 2 925 003**

**Description**

L'invention concerne le domaine du suivi de trajectoire d'un véhicule automobile, et plus particulièrement des systèmes et procédés de maintien et de correction de la trajectoire lorsqu'un véhicule sous-vire.

L'invention s'applique au suivi de trajectoire d'un véhicule automobile lorsqu'il se trouve dans un virage et qu'il y a une demande de couple moteur de la part de l'utilisateur.

Lors d'un virage avec demande de couple sur le train avant, un véhicule à traction avant à tendance à sous-virer, c'est-à-dire que son rayon de braquage est supérieur à la courbe définie par la route. Dans le cas d'un véhicule à propulsion, le véhicule à tendance à survirer.

Dans ce domaine, le demandeur a déjà exposé, dans la demande FR 2955943 un système de suivi de la trajectoire d'un véhicule automobile comportant un capteur de vitesse instantanée sur chacune des roues des trains avant et arrière. Ce système comporte des moyens de calcul de l'écart de vitesse entre roues d'un même train, des moyens de calcul de la différence entre les écarts de vitesses de chacun des trains, et des moyens de comparaison de cette différence avec une valeur seuil mémorisée.

Une telle solution permet de pouvoir détecter rapidement un écart de trajectoire sous accélération et par conséquent de pouvoir corriger l'écart afin de perturber le moins possible le conducteur.

La présente invention est un perfectionnement de la solution décrite dans la demande FR 2955943.

La présente invention vise, par rapport à la demande FR 2955943, d'une part à prendre en compte les conditions d'adhérence de la chaussée, et d'autre part à indiquer au conducteur, notamment les limites de stabilité du véhicule.

La présente invention est atteinte à l'aide d'un système de suivi de la trajectoire d'un véhicule automobile comportant :

- un capteur de vitesse instantanée sur chacune des roues des trains avant et arrière,
- des moyens de calcul de l'écart de vitesse entre roues d'un même train,
- des moyens de calcul de la différence entre les écarts de vitesses de chacun des trains,
- des moyens de comparaison de cette différence avec une valeur seuil mémorisée,
- des moyens de détermination de la trajectoire du véhicule en fonction de l'écart de vitesse des roues du train arrière ou en fonction du signe de la mesure de l'angle du volant de direction du véhicule,
- des moyens de détermination d'une consigne de correction de vitesse et des moyens d'application de la consigne de correction de vitesse sur la roue avant intérieure de la trajectoire,

caractérisé en ce que le système comporte des moyens de mesure ou de calcul de l'adhérence mobilisée par le véhicule, et en ce que la consigne de correction de vitesse est modulée par l'information de l'adhérence mobilisée par le véhicule.

Ainsi, la présente invention se propose de déterminer un indicateur de stabilité du véhicule basé sur l'adhérence en situation du véhicule, afin, d'une part que le système de suivi de trajectoire intègre cet indicateur pour moduler au besoin la consigne de correction de vitesse, et d'autre part, pour proposer au conducteur une alerte sur l'état de stabilité du véhicule.

Selon l'invention, le système comporte des moyens de calcul du ratio entre la valeur de la consigne et l'adhérence mobilisée, la modulation de la consigne de correction de vitesse étant active lorsque ledit ratio est supérieur à un seuil S.

Avantageusement, la consigne de correction de vitesse est la pression sur l'étrier de frein de la roue intérieure au virage, et en ce que le seuil S du ratio au-dessus duquel la modulation est activée est égal à 30 bars.

L'invention comporte ainsi, préférentiellement, une représentation visuelle, et/ou sonore et/ou tactile du ratio ainsi calculé.

Selon une mise en oeuvre simplifiée de l'invention, le système comporte des moyens de mesure de l'accélération longitudinale ($\gamma l$) et transversale ($\gamma t$) du véhicule afin de déterminer l'adhérence mobilisée ($\mu_{\_mobilisée}$) par le véhicule

par la formule : $\mu\_mobilisée = \dfrac{\sqrt{\left(\gamma t_{mesurée}\right)^2 + \left(\gamma l_{mesurée}\right)^2}}{\gamma t\_\max}$, où où $\gamma t\_\max$ est l'accélération transversale maximale admissible par le véhicule.

Le système comprend avantageusement une cartographie mémorisée de valeurs seuil en fonction de la vitesse véhicule et de l'angle du volant de direction du véhicule.

La présente invention est également relative à un procédé de suivi de la trajectoire d'un véhicule automobile, caractérisé en ce qu'il comprend les étapes suivantes :

- calcul des écarts de vitesse des roues de chacun des trains avant et arrière,
- calcul de la différence des écarts de vitesse entre chacun des trains avant et arrière,

- comparaison de la différence des écarts de vitesse avec une valeur seuil mémorisée fonction de la vitesse du véhicule et de l'angle du volant de direction du véhicule,
- détermination de la consigne de correction de vitesse à appliquer sur a roue intérieure en fonction d'une mesure de l'angle du volant de direction du véhicule et du couple moteur,
- calcul ou mesure de l'adhérence mobilisée par le véhicule,
- modulation de la consigne de correction de vitesse par l'information de l'adhérence mobilisée par le véhicule.

Selon d'autres caractéristiques, le procédé comporte :

- une étape de détermination de la trajectoire du véhicule en fonction de l'écart de vitesse des roues du train arrière ou en fonction du signe de la mesure de l'angle du volant de direction du véhicule,
- une étape d'application de la consigne de correction sur la roue avant intérieure de la trajectoire.

D'autres caractéristiques et avantages de l'invention apparaîtront mieux à la lecture de la description suivante, en référence aux figures annexées parmi lesquelles :

- la figure 1 est une représentation schématique d'un véhicule selon l'invention ;
- la figure 2 est une représentation schématique d'un véhicule qui sous-vire dans une courbe à gauche ;
- la figure 3 est un rappel de la représentation schématique des principales étapes du procédé de détection et de correction d'un écart de trajectoire dans une courbe à gauche et tel que décrit dans la demande FR 2955943 ;
- la figure 4 est une cartographie d'alerte conducteur selon l'invention ;
- la figure 5 représente une illustration possible du système de régulation pour le conducteur ;
- la figure 6 est un exemple de représentation de l'organe de commande du dispositif de suivi de trajectoire incorporant la présente invention.

On se réfèrera à la demande de brevet FR 2955943 pour les caractéristiques générales de l'invention. Toutefois, pour rappel, et pour la cohérence de la présente description, le véhicule pris comme exemple d'application de la présente invention est un véhicule 1 de type automobile, à traction, entraîné par un moteur (non représenté), comportant quatre roues 2 à 5 (roue avant gauche 2, roue avant droite 3, roue arrière gauche 4 et roue arrière droite 5). Chaque roue 2 à 5 est équipée respectivement d'un capteur de vitesse instantanée 6 à 9 permettant de mesurer les vitesses $\omega_{avg}$, $\omega_{avd}$, $\omega_{arg}$ et $\omega_{ard}$ des roues 2 à 5.

Le véhicule dispose par ailleurs d'un dispositif de freinage 10 capable de générer une pression de freinage différente dans les étriers de freins avant gauche 11 et droit 12, ce dispositif de freinage 10 peut, par exemple, être un dispositif type actionneur ESC (Electronic Stability Control). L'utilisation d'un tel dispositif présente également l'avantage de comprendre des capteurs de vitesses instantanées des roues.

Le véhicule comprend un volant de direction 13 permettant d'orienter les roues avant 2 et 3, équipé d'un capteur 14 de l'angle $\alpha$ du volant de direction 13.

Le véhicule 1 comporte, également, un capteur du couple 15 moteur permettant de mesurer le couple moteur M et un capteur de vitesse 16 du véhicule 1 mesurant la vitesse $v$ du véhicule 1.

Le véhicule 1 est équipé d'un calculateur 17 permettant de contrôler et de commander différents dispositifs. Le calculateur 17 peut recevoir, par des connexions, des informations, par exemple, en provenance des capteurs de vitesse 6 à 9, du capteur de couple 15 moteur et du capteur de l'angle 14 du volant de direction 13. Le calculateur 17 peut aussi commander le dispositif de freinage 10. Le calculateur 17 permet, en outre, d'exécuter le procédé de commande de la trajectoire du véhicule 1.

Selon l'invention, le véhicule est également équipé de moyens permettant de mesurer ou d'estimer l'accélération transversale et longitudinale du véhicule.

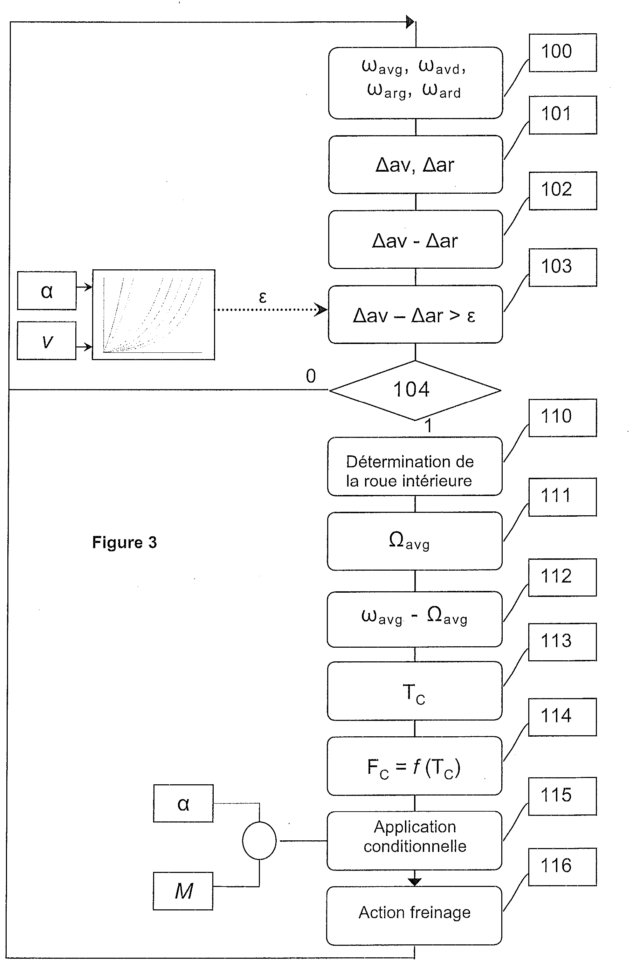

Comme représenté à la figure 3, le procédé comprend une étape 100 d'acquisition des signaux des capteurs de vitesses 6 à 9 indexés $\omega_{avg}$, $\omega_{avd}$, $\omega_{arg}$ et $\omega_{ard}$. Le procédé comprend, également, une étape 101 de calcul des écarts de vitesse des roues des trains avant $\Delta av$ et arrières $\Delta ar$. En d'autres termes, l'étape 101 permet de calculer l'écart des vitesses selon les équations (1) et (2) suivantes :

$$\text{train avant } \Delta av = (\omega_{avd} - \omega_{avg}) \qquad (1)$$

et

$$\text{train arrière } \Delta ar = (\omega_{ard} - \omega_{arg}) \quad (2)$$

Puis une étape 102 permet de calculer la différence de l'écart de vitesse des roues du train avant Δav avec l'écart de vitesse des roues du train arrière Δar, selon l'équation (3) suivante :

$$(\omega_{avd} - \omega_{avg}) - (\omega_{ard} - \omega_{arg}) \quad (3)$$

L'étape suivante 103 permet de comparer le résultat du calcul de l'étape 102 avec une valeur seuil mémorisée $\varepsilon$. La valeur seuil $\varepsilon$ peut être déterminée, selon l'exemple illustré, pour une cartographie de l'angle a du volant de direction 13 du véhicule 1 et la vitesse V du véhicule. A chaque couple (a, V) correspond un seuil unique. Une troisième variable peut déjà être incorporée à ce stade pour préciser le seuil de déclenchement de la régulation, à savoir le couple moteur demandé par le conducteur, par exemple par l'intermédiaire de la pédale d'accélération (en pointillé sur la figure).

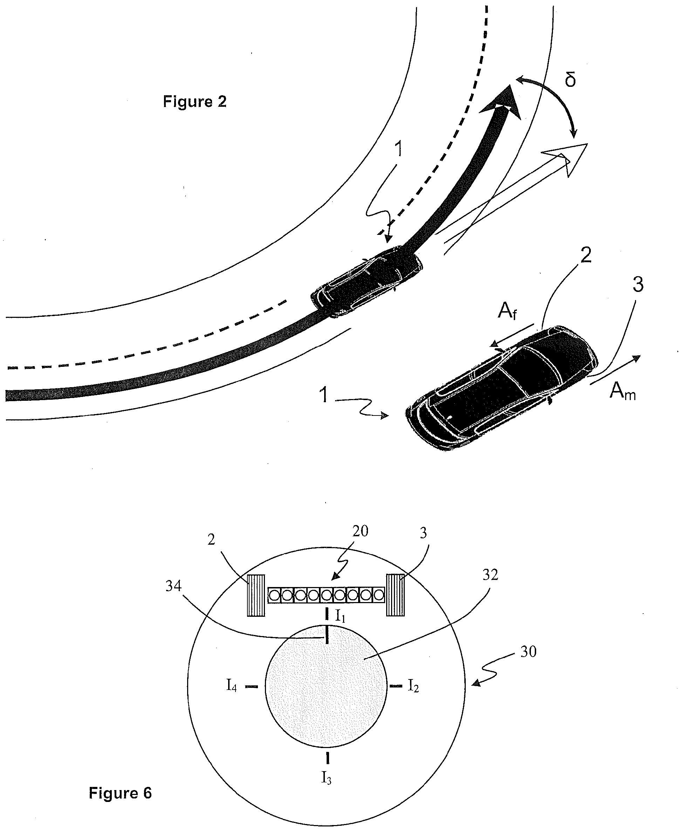

Une étape 104 de diagnostic de la trajectoire du véhicule 1, tient compte du résultat de l'étape 103. Dans le cas où $(\omega_{avd} - \omega_{avg}) - (\omega_{ard} - \omega_{arg}) < \varepsilon$, le procédé ne détecte pas d'écart de trajectoire et envoi la valeur 0 en sortie du comparateur ce qui entraine le retour du procédé à partir de l'étape 100. Dans le cas contraire, c'est-à-dire $(\omega_{avd} - \omega_{avg}) - (\omega_{ard} - \omega_{arg}) > \varepsilon$ ce qui correspond à un écart de trajectoire $\delta$, comme représenté à la figure 2, le procédé détecte un écart de trajectoire et envoi la valeur 1 en sortie du comparateur ce qui entraîne la poursuite du procédé par une étape 110.

L'étape 110 permet de déterminer laquelle des roues avant 2 ou 3 est la roue avant intérieure à la trajectoire, dans le but de commander l'étrier de frein qui lui est associé pour la correction de la trajectoire du véhicule. La roue avant 2 ou 3 intérieure est la roue avant intérieure à la trajectoire par rapport à la courbe du véhicule 1, en d'autres termes la roue avant intérieure est la roue avant parcourant le moins de distance dans la courbe. La roue avant 2 ou 3 intérieure est déterminée par la valeur algébrique de l'écart de vitesse des roues du train arrière Δar. Selon une variante, la roue avant 2 ou 3 intérieure peut être déterminée par la valeur de l'angle a du volant de direction 13.

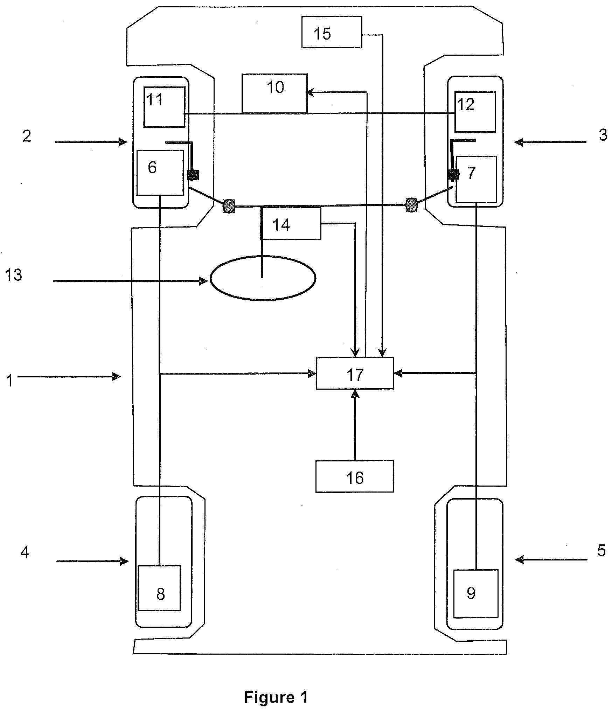

Dans l'exemple illustré sur la figure 2, la roue avant intérieure est la roue avant gauche 2 illustrée sur la figure 1, pour la suite de la description le cas présenté à la figure 2 sera étudié.

Une étape 111 permet de calculer une vitesse de consigne $\Omega_{avg}$, pour la roue avant intérieure afin de réduire l'écart de trajectoire du véhicule 1. La correction à pour objectif d'égaliser la différence des vitesses des roues du train avant Δav et celle des roues du train arrière Δar. En partant de cette égalité on peut en déduire la vitesse de consigne pour la roue avant intérieure 2, qui est obtenue par l'équation (4) :
Δav = Δar, ce qui, compte tenu des équations (1) et (2),
donne :

$$\omega_{avd} - \Omega_{avg} = \omega_{ard} - \omega_{arg}$$

$$\Omega_{avg} = \omega_{avd} - (\omega_{ard} - \omega_{arg}) \quad (4)$$

Une étape 112 permet de comparer la vitesse de consigne $\Omega_{avg}$ avec la vitesse instantanée de la roue avant $\omega_{avg}$ intérieure. Le moyen de comparaison peut être, comme dans le mode de réalisation présenté à la figure 2, la différence entre la vitesse de consigne $\Omega_{avg}$ et la vitesse instantanée de la roue $\omega_{avg}$ mais il aurait pu être le rapport de ces vitesses.

Selon le mode de réalisation présenté, le procédé comprend une étape 113 de calcul d'une valeur de correction de vitesse $T_C$ qui doit être appliquée afin que la vitesse de la roue avant gauche $\omega_{avg}$ atteigne la vitesse de consigne $\Omega_{avg}$. La correction de vitesse $T_C$ qui doit être apportée peut être calculée, par exemple, par un calcul proportionnel intégral.

Une étape 114 permet de calculer une valeur de la consigne $F_C$ à appliquer par le système 10 sur l'étrier du frein de la roue avant gauche 2, en fonction de la correction de vitesse $T_C$, selon l'équation (5) suivante :

$$F_C = f(T_C) \quad (5)$$

Une étape 115 permet une application conditionnelle de la consigne en fonction de certaines valeurs telles que l'angle a du volant de direction 13 et le couple moteur *M*.

Une étape 116 permet de commander le système de freinage 10 pour la valeur de la consigne $F_C$ calculée à l'étape 114 pour l'étrier de frein de la roue avant gauche 2.

Selon l'exemple illustré sur la figure 2, la roue avant gauche se trouve freinée, ce qui entraîne la réduction de la vitesse de la roue permettant de contrer le sous-virage.

Dans le cas où l'on aurait un écart de trajectoire dans une courbe à droite, la roue avant intérieure aurait été la roue avant droite 3. Le procédé, présenté à la figure 3, ne change pas mais il est à noter que l'équation (4) de l'étape 111 diffère en écriture. La vitesse de consigne pour la roue avant droite 3 est obtenue par l'équation (6) :

$$\Omega_{avd} = \omega_{avg} + (\omega_{ard} - \omega_{arg}) \qquad (6)$$

La consigne est appliquée par les systèmes qui permettent de piloter les vitesses des roues avant. Cette consigne revient à diminuer la vitesse de la roue avant intérieure soit par action des freins (action Af sur la figure 2), soit en réduisant le couple transmis sur cette roue dans le cas des moteurs indépendants et des différentiels pilotés, ce qui revient à une action moteur sur la roue droite (action Am sur la figure 2).

La représentation des moyens associés au calculateur pour la réalisation de ces étapes est détaillée dans la demande FR 2955943.

Selon la présente invention, des mesures ou estimations des accélérations longitudinales $\gamma l$ et transversales $\gamma t$ sont prises en compte au travers d'un calcul de l'adhérence mobilisée $\mu\_mobilisée$ par le véhicule et donnée par la formule :

$$\mu\_mobilisée = \frac{\sqrt{\left(\gamma t_{mesurée}\right)^2 + \left(\gamma l_{mesurée}\right)^2}}{\gamma t\_\max}$$

où $\gamma t\_\max$ est l'accélération transversale maximale admissible par le véhicule, qui est une donnée constructeur. Il pourrait être envisagé de déterminer l'adhérence mobilisée par des calculs plus précis mais nécessitant des temps de calculs plus longs. On peut citer par exemple l'identification des corrélations entre les efforts réalisés à l'interface sol-pneu et le glissement, l'analyse des moments réalisés à l'interface sol-pneu (moment d'auto-alignement), les couples d'assistance de la direction assistée (électrique ou hydraulique) notamment.

Les mesures des accélérations longitudinales et transversales peuvent être réalisées par des capteurs spécifiques. Toutefois, lorsque le véhicule est équipé d'un dispositif ESC, les mesures des accélérations longitudinales et transversales sont déjà disponibles par le dispositif ESC.

Ce calcul n'est déclenché que lorsqu'une situation de sous-virage est détectée et qu'un suivi de trajectoire est nécessaire

En fonction du niveau de l'adhérence mobilisée, qui donne une estimation du niveau de sollicitation du véhicule, les actions du dispositif associé de rectification de la trajectoire vont tenir compte de cette adhérence mobilisée, tout en alertant le conducteur du niveau de sollicitation de son véhicule.

Ainsi, lorsqu'une situation de sous-virage est détectée, le système de suivi de trajectoire décrit dans la demande de brevet FR 2955943 permet de calculer une consigne nécessaire au respect de la trajectoire. Cette consigne peut être ainsi pondérée par le niveau d'adhérence mobilisée calculée pendant la régulation, puis interprétée en fonction du niveau de sollicitation ou du risque perçu dans le but d'en informer le conducteur de façon préventive.

La consigne générée est représentative du couple à appliquer pour rectifier la trajectoire, ce qui, dans le cas où la correction consiste à freiner la roue intérieure (roue gauche dans l'exemple proposé), est représenté par la pression à appliquer sur l'étrier de frein.

Ainsi, il est défini un critère de risque égal au ratio de la pression Pr calculée par le système de suivi de trajectoire, sur l'adhérence mobilisée $\mu_{\_mobilisée}$.

En fonction de la grandeur utilisée pour la régulation lors de la détection d'un sous-virage, le critère de risque pourrait être basé sur un autre paramètre, par exemple sur le seul critère de l'écart de vitesse ou du couple appliqué.

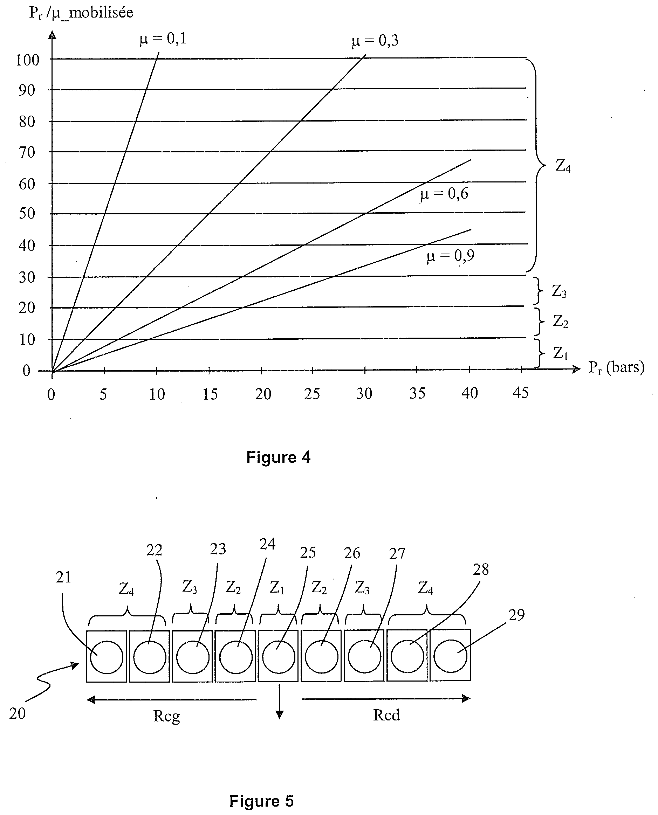

La représentation de ce critère en fonction de la pression de régulation est donnée par la figure 4 qui fait également apparaître différents niveaux d'adhérence mobilisée.

Ce critère de risque permet de définir différentes zones de risque, dont les niveaux peuvent provenir de simulation ou d'expérience. Ces niveaux peuvent être ajustés en fonction du véhicule et de l'effet d'alerte recherché. La zone Z1 correspond à une situation sans danger, alors que la zone Z4 correspond à une situation critique, en limite d'adhérence, la situation étant d'autant plus critique que le critère de risque est élevé.

Dès lors, il est prévu, lorsque le critère de risque est élevé, c'est-à-dire lorsque le seuil de la zone Z4 est franchi, soit 30 bars, de réduire la pression calculée pour appliquer une pression moindre, de manière à assurer la stabilité du véhicule, quitte à ce que le véhicule reste en sous-virage, l'évolution du critère de risque pouvant permettre, par la suite, une augmentation de la pression.

Ce seuil de modulation de la pression à appliquer peut être ajusté à une valeur plus élevée selon l'allure sportive que l'on souhaite voire mise en oeuvre sur le véhicule.

Cette réduction de pression est étalonnée lors de la mise au point du véhicule et différentes lois peuvent lui être associées (valeur constante de réduction, pourcentage de la valeur calculée, filtration par une valeur limite supérieure réellement appliquée,...).

De plus, il paraît, dès lors, important d'informer le conducteur de l'action du système pouvant être pondérée par l'adhérence calculée, de sorte que le conducteur soit averti des limites d'adhérence du véhicule par rapport à son style de conduite.

Ainsi, ces quatre niveaux de risque peuvent être représentés par des indicateurs disponibles au niveau du tableau de bord ou à proximité, de manière à être visibles par le conducteur lors de la conduite du véhicule, la régulation intervenant dans des phases de conduite dynamiques.

La figure 5 montre une illustration de l'état du système de régulation au travers d'un afficheur 20 comportant des diodes représentant les différentes zones Z1 à Z4 précédemment définies. Selon l'exemple proposé, l'afficheur présente 9 diodes de différentes couleurs, référencées de 21 à 29. La diode centrale 25 indique que le système est dans la zone Z1 qui correspond donc à une faible régulation liée à un sous-virage à peine perceptible par le conducteur. Il a été choisi, dès lors, de ne pas alerter outre mesure le conducteur, mais juste lui indiquer que le système de correction est en activité à un niveau de correction faible. La diode pour représenter cet état est de couleur verte, car aucun danger n'est à craindre quant à la stabilité du véhicule.

La représentation du fonctionnement a été choisie pour illustrer une régulation sur la roue avant droite ou gauche, selon le sens du virage. Ainsi, les diodes situées à droite de la diode 25, soit les diodes 26 à 29, correspondent à une régulation Rcd pour un virage à droite, tandis que les diodes 21 à 24 correspondent à une régulation Rcg pour un virage à gauche.

La représentation du fonctionnement est ainsi symétrique, les diodes 24 et 26 correspondent à la zone Z2 du critère de risque, les diodes 23 et 27 correspondent à la zone Z3 du critère de risque, et les diodes 21, 22, 27 et 28 correspondent à la zone Z4 du critère de risque.

Afin d'alerter progressivement le conducteur que le véhicule s'approche ou est dans une phase critique de stabilité, les diodes correspondant à la zone Z2 sont jaunes, celles de la zone Z3 sont oranges et les diodes de la zone Z4 sont rouges. La zone Z4 correspondant à la limite de stabilité, il a été choisi de disposer deux diodes pour chaque sens de virage pour indiquer plus clairement au conducteur que le véhicule est dans une situation dangereuse de stabilité, afin qu'il modifie sa conduite. Cette alerte peut également être doublée d'une alerte sonore.

Les deux diodes rouges peuvent être allumées en même temps ou correspondre, chacune, à un niveau différent du critère de risque dans la zone Z4.

Il pourrait également être envisagé des diodes plus grosses afin de rendre l'effet visuel plus probant.

Lorsque le dispositif n'est pas en régulation, aucune diode n'est allumée.

D'autres représentations de l'état de fonctionnement du dispositif de suivi de trajectoire peuvent être envisagées, notamment par l'intermédiaire d'un écran de type TFT ou leds, de tels types d'écran équipent maintenant de nombreux véhicules pour indiquer les fonctionnements ou dysfonctionnements des véhicules. Des indications purement sonores ou purement tactiles (boucles de ceinture actives, sièges ou volant vibrant,...) peuvent également être envisagées dans le cadre de la présente invention, ou une combinaison de telles indications.

La figure 6 présente une implantation possible d'une commande de sélecteur du dispositif de suivi de trajectoire par un organe de commande 30 comportant un bouton rotatif 32 muni d'un indicateur de sélection 34 pouvant être disposé devant plusieurs indicateurs $I_1$ à $I_4$ selon la rotation du bouton 32.

Cette commande et les différents états possibles sont reliés au calculateur 17 pour l'activation / désactivation des dispositifs et systèmes correspondants.

Ainsi, le mode $I_1$ correspond à la désactivation du dispositif de suivi de la trajectoire, où toutes les diodes restent éteintes.

Le mode $I_3$ correspond au mode tel que décrit dans la présente invention. Lié à une conduite plutôt sportive, ce mode est appelé mode sport ou dynamique. Dès lors, l'afficheur 20 ainsi que la symbolisation des roues 2 et 3, disposés dans la partie haute de la commande, sont activés et permette au conducteur de visualiser facilement le fonctionnement du dispositif de régulation.

Le mode $I_2$ correspond à un fonctionnement du dispositif dans des régulations plus douces, où les seuils de détection sont différents que ceux définis pour le mode I3. Ces seuils sont notamment plus élevés afin de présenter moins de régulation, ou des régulations plus douces.

Enfin le mode $I_4$ est une combinaison de différentes fonctions axées principalement sur la détection de chaussées difficiles telles la pluie, la boue, la neige, et où les seuils sont adaptés à une régulation sur ces sols plus difficiles à gérer. Le dispositif de suivi de trajectoire et de régulation est actif mais basé, notamment pour les seuils de détection, sur des cartographies adaptées à ces sols.

**Revendications**

1.  Système de suivi de la trajectoire d'un véhicule automobile (1) comportant :

    - un capteur de vitesse instantanée sur chacune des roues (6, 9) des trains avant et arrière,
    - des moyens de calcul de l'écart de vitesse entre roues d'un même train ($\Delta$av et $\Delta$ar),
    - des moyens de calcul de la différence entre les écarts de vitesses de chacun des trains,
    - des moyens de comparaison de cette différence avec une valeur seuil mémorisée ($\varepsilon$),
    - des moyens de détermination de la trajectoire du véhicule en fonction de l'écart de vitesse des roues du train arrière ($\Delta$ar) ou en fonction du signe de la mesure de l'angle du volant de direction (14) du véhicule,
    - des moyens de détermination d'une consigne de correction de vitesse ($T_C$) et des moyens d'application de la consigne de correction de vitesse ($T_C$) sur la roue avant intérieure de la trajectoire,

    **caractérisé en ce que** le système comporte :

    - des moyens de mesure ou de calcul de l'adhérence mobilisée ($\mu_{-mobilisée}$) par le véhicule, la consigne de correction de vitesse (Tc) étant modulée par l'information de l'adhérence mobilisée ($\mu_{-mobilisée}$) par le véhicule,
    - des moyens de calcul du ratio entre la valeur de la consigne et l'adhérence mobilisée et **en ce que** la modulation de la consigne de correction de vitesse est active lorsque ledit ratio est supérieur à un seuil S.

2.  Système selon la revendication précédente, **caractérisé en ce que** la consigne de correction de vitesse est la pression sur l'étrier de frein de la roue intérieure au virage, et **en ce que** le seuil S du ratio au-dessus duquel la modulation est activée est égal à 30 bars.

3.  Système selon l'une des revendications précédentes, **caractérisé en ce qu'**il comporte une représentation visuelle (20), et/ou sonore et/ou tactile du ratio ainsi calculé.

4.  Système selon l'une des revendications précédentes, **caractérisé en ce qu'**il comporte des moyens de mesure de l'accélération longitudinale ($\gamma l$) et transversale ($\gamma t$) du véhicule (1) afin de déterminer l'adhérence mobilisée

    ($\mu_{-mobilisée}$) par le véhicule par la formule : $$\mu\_mobilisée = \frac{\sqrt{\left(\gamma l_{mesurée}\right)^2 + \left(\gamma t_{mesurée}\right)^2}}{\gamma t\_max},$$ où où

    $\gamma t\_max$ est l'accélération transversale maximale admissible par le véhicule.

5.  Système selon la revendication 1, dans lequel il comprend une cartographie mémorisée de valeurs seuil en fonction de la vitesse (16) véhicule et de l'angle du volant de direction (14) du véhicule.

6.  Procédé de suivi de la trajectoire d'un véhicule automobile, comprenant les étapes suivantes :

    - calcul des écarts de vitesse des roues de chacun des trains avant et arrière ($\Delta$av et $\Delta$ar),
    - calcul de la différence des écarts de vitesse entre chacun des trains avant et arrière ($\Delta$av et $\Delta$ar),
    - comparaison de la différence des écarts de vitesse avec une valeur seuil mémorisée ($\varepsilon$) fonction de la vitesse du véhicule (*v*) et de l'angle du volant de direction (a) du véhicule,
    - détermination de la consigne de correction de vitesse ($T_C$) à appliquer sur a roue intérieure en fonction d'une mesure de l'angle du volant de direction (a) du véhicule et du couple moteur (*M*),

    le procédé étant **caractérisé par** les étapes suivantes:

    - calcul ou mesure de l'adhérence mobilisée ($\mu_{-mobilisée}$) par le véhicule,
    - calcul du ratio entre la valeur de la consigne et l'adhérence mobilisée
    - modulation de la consigne de correction de vitesse (Tc) par l'information de l'adhérence mobilisée ($\mu_{-mobilisée}$) par le véhicule lorsque ledit ratio est supérieur à un seuil S..

7.  Procédé selon la revendication 6, comportant une étape de détermination de la trajectoire du véhicule en fonction de l'écart de vitesse des roues du train arrière ($\Delta$ar) ou en fonction du signe de la mesure de l'angle du volant de direction (a) du véhicule.

**8.** Procédé selon l'une des revendications 6 ou 7, dans lequel il comporte une étape d'application de la consigne de correction sur la roue avant intérieure de la trajectoire.

**Patentansprüche**

**1.** System zur Überwachung der Bahn eines Kraftfahrzeugs (1), umfassend:

- einen Momentangeschwindigkeitssensor auf jedem der Räder (6, 9) der vorderen und hinteren Radsätze,
- Mittel zur Berechnung des Geschwindigkeitsabstands zwischen Rädern eines selben Radsatzes ($\Delta$av und $\Delta$ar),
- Mittel zur Berechnung der Differenz zwischen den Geschwindigkeitsabständen jedes der Radsätze,
- Mittel zum Vergleichen dieser Differenz mit einem gespeicherten Grenzwert ($\varepsilon$),
- Mittel zur Bestimmung der Bahn des Fahrzeugs in Abhängigkeit von dem Geschwindigkeitsabstand der Räder des hinteren Radsatzes ($\Delta$ar) oder in Abhängigkeit vom Vorzeichen der Messung des Winkels des Lenkrades (14) des Fahrzeugs,
- Mittel zur Bestimmung eines Geschwindigkeitskorrektursollwerts ($T_C$) und Mittel zur Anwendung des Geschwindigkeitskorrektursollwerts ($T_C$) am inneren Vorderrad der Bahn,

**dadurch gekennzeichnet, dass** das System umfasst:

- Mittel zur Messung oder Berechnung der mobilisierten Haftung ($\mu_{\_mobilisiert}$) durch das Fahrzeug, wobei der Geschwindigkeitskorrektursollwert ($T_C$) durch die Information der mobilisierten Haftung ($\mu_{\_mobilisiert}$) durch das Fahrzeug moduliert wird,
- Mittel zur Berechnung des Verhältnisses zwischen dem Wert des Sollwerts und der mobilisierten Haftung, und dass die Modulation des Geschwindigkeitskorrektursollwerts aktiv ist, wenn das Verhältnis größer als eine Grenze S ist.

**2.** System nach dem vorhergehenden Anspruch, **dadurch gekennzeichnet, dass** der Geschwindigkeitskorrektursollwert der Druck auf den Bremssattel des inneren Rades in der Kurve ist, und dass die Grenze S des Verhältnisses, über der die Modulation aktiviert wird, gleich 30 bar ist.

**3.** System nach einem der vorhergehenden Ansprüche, **dadurch gekennzeichnet, dass** es eine visuelle (20) und/oder akustische und/oder taktile Darstellung des so berechneten Verhältnisses umfasst.

**4.** System nach einem der vorhergehenden Ansprüche, **dadurch gekennzeichnet, dass** es Mittel zum Messen der Längs- ($\gamma$l) und Querbeschleunigung (yt) des Fahrzeugs (1) umfasst, um die mobilisierte Haftung ($\mu_{\_mobilisiert}$) durch das Fahrzeug mit folgender Formel zu berechnen: $\mu_{\_mobilisiert} = \dfrac{\sqrt{\left(\gamma_{gemessen}\right)^2 + \left(\gamma_{gemessen}\right)^2}}{\gamma_{\_max}}$, wobei $\gamma$t_max die maximal zulässige Querbeschleunigung durch das Fahrzeug ist.

**5.** System nach Anspruch 1, wobei es eine gespeicherte Kartographie von Grenzwerten in Abhängigkeit von der Geschwindigkeit (16) des Fahrzeugs und dem Winkel des Lenkrades (14) des Fahrzeugs umfasst.

**6.** Verfahren zur Überwachung der Bahn eines Kraftfahrzeugs, umfassend die folgenden Schritte:

- Berechnung der Geschwindigkeitsabstände zwischen jedem der vorderen und hinteren Radsätze ($\Delta$av und $\Delta$ar),
- Berechnung der Differenz zwischen den Geschwindigkeitsabständen jedes der vorderen und hinteren Radsätze ($\Delta$av und $\Delta$ar),
- Vergleich der Differenz der Geschwindigkeitsabstände mit einem gespeicherten Grenzwert ($\varepsilon$) in Abhängigkeit von der Geschwindigkeit des Fahrzeugs (v) und dem Winkel des Lenkrads (a) des Fahrzeugs,
- Bestimmung des Geschwindigkeitskorrektursollwerts ($T_C$), der am inneren Vorderrad in Abhängigkeit von einer Messung des Winkels des Lenkrades (a) des Fahrzeugs und dem Drehmoment (M) anzuwenden ist, wobei das Verfahren durch die folgenden Schritte gekennzeichnet ist:
- Messung oder Berechnung der mobilisierten Haftung ($\mu_{\_mobilisiert}$) durch das Fahrzeug,
- Berechnung des Verhältnisses zwischen dem Wert des Sollwerts und der mobilisierten Haftung,

- Modulation des Geschwindigkeitskorrektursollwerts ($T_C$) durch die Information der mobilisierten Haftung ($\mu_{\_mobilisiert}$) durch das Fahrzeug, wenn das Verhältnis größer als eine Grenze S ist.

7. Verfahren nach Anspruch 6, umfassend einen Schritt der Bestimmung der Bahn des Fahrzeugs in Abhängigkeit vom Geschwindigkeitsabstand der Räder des hinteren Radsatzes ($\Delta$ar) oder in Abhängigkeit vom Vorzeichen der Messung des Winkels des Lenkrads (a) des Fahrzeugs.

8. Verfahren nach einem der Ansprüche 6 oder 7, wobei es einen Schritt der Anwendung des Korrektursollwerts am inneren Vorderrad der Bahn umfasst.


**Claims**

1. System for monitoring the trajectory of a motor vehicle (1) including:

 - an instantaneous speed sensor on each of the wheels (6, 9) of the front and rear axles,
 - means for calculating the variation in speed between wheels of a same axle ($\Delta$fr and $\Delta$re),
 - means for calculating the difference between the variations in speeds of each of the axles,
 - means for comparing this difference with a stored threshold value ($\varepsilon$),
 - means for determining the trajectory of the vehicle as a function of the variation in speed of the wheels of the rear axle ($\Delta$re) or as a function of the sign of the measurement of the angle of the steering wheel (14) of the vehicle,
 - means for determining a speed correction setpoint ($T_C$) and means for applying the speed correction setpoint ($T_C$) to the inner front wheel of the trajectory,

 **characterized in that** the system includes:

 - means for measuring or calculating the grip generated ($\mu_{\_generated}$) by the vehicle, the speed correction setpoint ($T_C$) being modulated by the information on the grip generated ($\mu_{\_generated}$) by the vehicle,
 - means for calculating the ratio between the value of the setpoint and the generated grip and **in that** the modulation of the speed correction setpoint is active when said ratio is greater than a threshold S.

2. System according to the preceding Claim, **characterized in that** the speed correction setpoint is the pressure on the brake caliper of the bend inner wheel, and **in that** the threshold S of the ratio above which the modulation is activated is equal to 30 bar.

3. System according to either of the preceding claims, **characterized in that** it includes a visual (20), and/or sound and/or tactile representation of the ratio calculated in this manner.

4. System according to one of the preceding claims, **characterized in that** it includes means for measuring the longitudinal ($\gamma$l) and lateral ($\gamma$t) acceleration of the vehicle (1) in order to determine the grip generated ($\mu_{\_generated}$) by the vehicle using the formula:

$$\mu\_generated = \frac{\sqrt{(\gamma t_{measured})^2 + (\gamma l_{measured})^2}}{\gamma t\_\max}$$

where $\gamma$t_max is the maximum lateral acceleration permitted by the vehicle.

5. System according to Claim 1, wherein it comprises a stored mapping of threshold values as a function of the vehicle speed (16) and of the angle of the steering wheel (14) of the vehicle.

6. Method of monitoring the trajectory of a motor vehicle, comprising the following steps:

 - calculating the variations in speed of the wheels of each of the front and rear axles ($\Delta$fr and $\Delta$re),
 - calculating the difference in the variations in speed between each of the front and rear axles ($\Delta$fr and $\Delta$re),
 - comparing the difference in the variations in speed with a stored threshold value ($\varepsilon$) which is dependent upon the speed of the vehicle (*v*) and the angle of the steering wheel ($\alpha$) of the vehicle,

- determining the speed correction setpoint ($T_C$) to be applied to the inner wheel as a function of a measurement of the angle of the steering wheel (a) of the vehicle and of the engine torque (*M*),

the method being **characterized by** the following steps:

- calculating or measuring the grip generated ($\mu_{generated}$) by the vehicle,
- modulating the speed correction setpoint ($T_C$) using the information on the grip generated ($\mu_{generated}$) by the vehicle when said ratio is greater than a threshold S.

**7.** Method according to Claim 6, including a step for determining the trajectory of the vehicle as a function of the variation in speed of the wheels of the rear axle ($\Delta$re) or as a function of the sign of the measurement of the angle of the steering wheel (a) of the vehicle.

**8.** Method according to either of Claims 6 and 7, wherein it includes a step for applying the correction setpoint to the inner front wheel of the trajectory.

**Figure 1**

Figure 2

Figure 6

**Figure 3**

Figure 4

Figure 5

**EP 2 870 038 B1**

## RÉFÉRENCES CITÉES DANS LA DESCRIPTION

### Documents brevets cités dans la description

- FR 2955943